# EUROPEAN PATENT SPECIFICATION

(11) **EP 3 087 828 B1**
(45) Date of publication and mention of the grant of the patent: **15.08.2018**
(21) Application number: 16167966.7
(22) Date of filing: 02.05.2016
(51) Int. Cl.: A01G 9/10, A01G 31/00, C05F 11/02, C05G 3/04, C09K 17/42

(54) **PLANT GROWTH SUBSTRATE AND METHOD FOR PRODUCING SUCH A SUBSTRATE**
PFLANZENWACHSSUBSTRAT UND VERFAHREN ZUR HERSTELLUNG SOLCH EINES SUBSTRATS
SUBSTRAT POUR LA CROISSANCE DES PLANTES ET PROCÉDÉ DE FABRICATION D'UN TEL SUBSTRAT

(30) Priority: 30.04.2015 US 201562154753 P
(43) Date of publication of application: 02.11.2016
(73) Proprietor: Oü Click & Grow, 10149 Tallinn (EE)
(72) Inventor: LEPP, Mattias, 50603 Tartu (EE); PEDASTSAAR, Priit, 61505 Elva (EE)
(74) Representative: Sarap, Margus

(56) References cited:
- WO-A1-2013/093086
- WO-A1-2015/044526
- GB-A- 2 254 074
- JP-A- 2014 143 931

## Description

### Field of the invention

The present invention relates to the field of plant growing substrates and growing methods.

### Background of the invention

Current polyurethane based stabilized growing substrates do not provide a carcass which would last physical damage or environmental conditions. Also polyurethane-based substrates can contain free isocyanates which are possibly dangerous and therefore regulated by the law.

International patent application WO2015044526A1 describes method for the manufacture of growing medium structures.

### Brief description of the invention

The aim of the present invention is to provide a strong plant growing substrate material which can be used as support for plants with no negative effects.

The present invention uses cutting-edge research in plant biology for higher yields, denser growth (up to 30 percent) and more nutritious produce-all with zero pesticides, non-GMO seeds and up to 95 percent less water use compared to traditional farming methods. The seed cartridges of the present invention with proprietary growth medium, grow lights and electronic precision irrigation (EPI), the present invention automatically provides plants with the perfect amount of water, light and nutrients at up to 80 percent less than the cost to set up a comparable hydroponic or aeroponic system. The present invention also comprises a connected mobile app, allowing users to easily adjust growth parameters through its EPI technology to meet custom growing needs.

The present invention uses low-cost, ultra-efficient technologies to remove the hurdles known from prior art, so anyone can grow hyperlocal, fresh food in their home, school, restaurant or community center with minimal management and easy scalability. The result is higher quality herbs, fruit and vegetables (for example strawberries, tomatoes, basil, lemon balm, thyme, salad rocket, chili peppers, and Amended 02.05.2017 - clean
stevia, lettuce, parsley, cilantro etc.) at a lower cost to the consumer and the environment.

With various options, the present invention can be set up to fit in any space. In alternative embodiments the present system comprises for example a smaller freestanding enclosed unit to grow 64 plants at once on four shelves and fit a space similar to a small refrigerator unit and for heavier demands, a larger freestanding enclosed unit for the prosumer will allow people to grow as many as 250 individual plants at once. The shelves of the present invention will work independently, allowing for use in open-design projects to customize any space.

An object of the invention is to provide a method for producing plant growing substrate comprising the steps of a) preparing a polyvinyl formal (PVF) solution; b) mixing starch into the solution and the stirring obtained mixture; c) pouring aldehyde, into the mixture and stirring the mixture; d) mixing concentrated sulfuric acid with water and adding it to the mixture of step c) while constantly stirring; e) heating the mixture of step d) and adding coir, peat, and mineral components; f) pouring the mixture of step e) into molds and heating the molds; g) removing the acid from material obtained in step f); and h) drying the material.

Another object of the invention is to provide a plant growing media comprising 1 - 50 w% polyvinyl formal (PVF); 1-25 w% of aldehyde solution; 1-25 w% of concentrated sulfuric acid; 1-80 w% of distilled water; and 1-50% of starch and optionally coco coir sphagnum peat, fertilizers and minerals.

### Brief description of the drawings

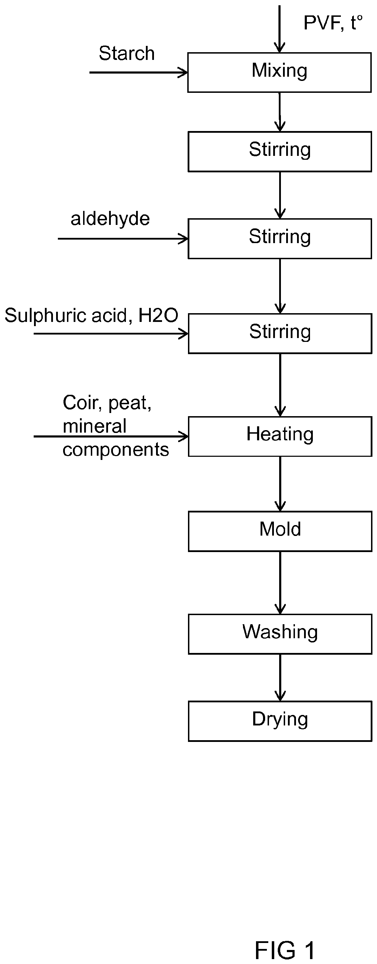

The preferred embodiment of present invention is explained more precisely with references to appended figures, where
Fig 1 is a block diagram of the method to produce plant growing substrate;
Fig 2a - Fig 2d illustrate the substrate according to the present invention in comparison with earlier known substrates.

### Detailed description of the invention

A method to produce stabile and crumble free plant growing media blocks comprises natural fibers (for example sphagnum peat, coco coir, etc.) which are chemically bound by a polyvinyl formal polymer.

To prepare a plant growing media with better elasticity and strength properties than polyurethane-based plant growing substrates, the media comprises by active ingredient weight:
polyvinyl formal (PVF) [1-50%]
aldehyde solution, preferably formaldehyde (solution) [1-25%]
concentrated sulphuric acid [1-25%]
distilled water [1-80%]
starch, preferably potato starch [1-50%].

In the alternative embodiments coco coir up to 95% or sphagnum peat is added to the composition. In another alternative embodiment the crowing media comprises fertilizer. In another embodiment the crowing media comprises limestone to adjust pH.

In alternative embodiments formaldehyde is partly replaced with acetaldehyde, glutaraldehyde or glyoxal to yield material with different physical properties. Altering the aldehyde can affect temperatures and process times for manufacturing.

PVF and coir are used to fasten and support the plants roots. Minerals and limestone are used to make the environment suitable for plant growth. Other compounds are used for the polymer forming reaction and are afterwards removed from the mixture. A method for producing plant crowing substrate comprises the steps of
a) Placing PVF granules into distilled water and mixing at 70 °C-95 °C, preferably 80 °C, in a controlled water bath for 0.5-6 hours, preferably 1.5 hours, to prepare a stock solution with a concentration between 5 to 15%.
b) Mixing the starch into the solution and stirring the received mixture.
c) Pouring the aldehyde, in preferred embodiment formaldehyde, into the mixture and stirring the received mixture.
d) Mixing the concentrated sulphuric acid with water and adding to the mixture while constantly stirring.
e) Heating the mixture to approximately 30 °C-70 °C, preferably 50 °C, and optionally adding the coir, peat, mineral components such as lime stone.
f) Pouring the mixture into molds and heating the molds 55 °C-95 °C for 1-24 hours preferably at 75 °C for 4 hours.
g) Taking the blocks out from the molds and vacuum washing with water until the excess acid is removed from the material. Sodium hydroxide can be used to neutralize the acids before the washing procedure.
h) Afterwards drying the blocks under normal conditions.

Regulation of the necessary amount of water, air, nutrients is based on the following:
a) water based on flow meter readings, soil moisture readings, plant age and size, temperature, user input.
b) Air by altering substrate porosity (amount of coir or peat) and by fans and cooling element.
c) Nutrients are dependent on substrate manufacturing process or can also be added during growth by automatic or manual means.

Substrates can be recycled and possibly reused to some extent. Also the material can be composted and burned contrary to rock wool based growing substrates.

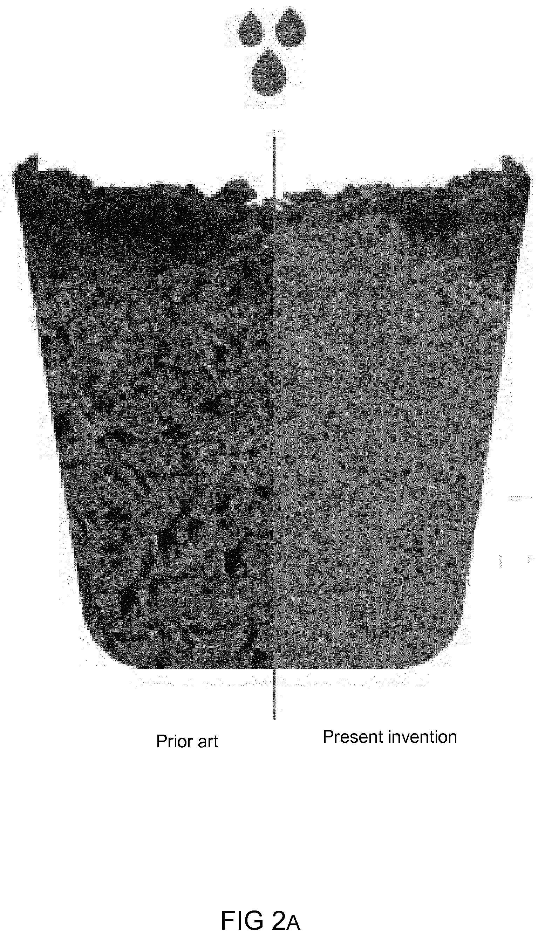

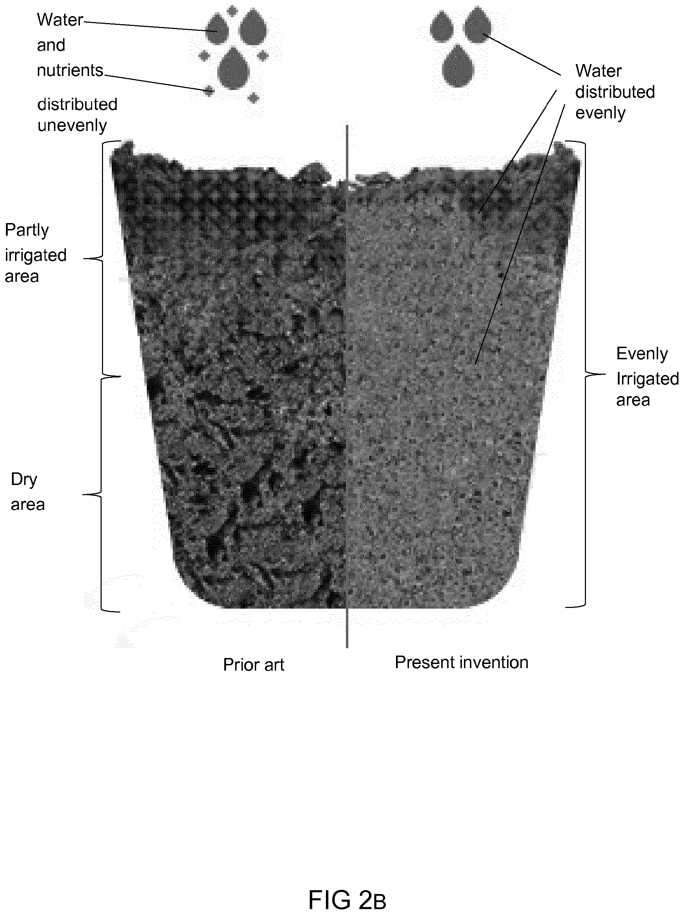

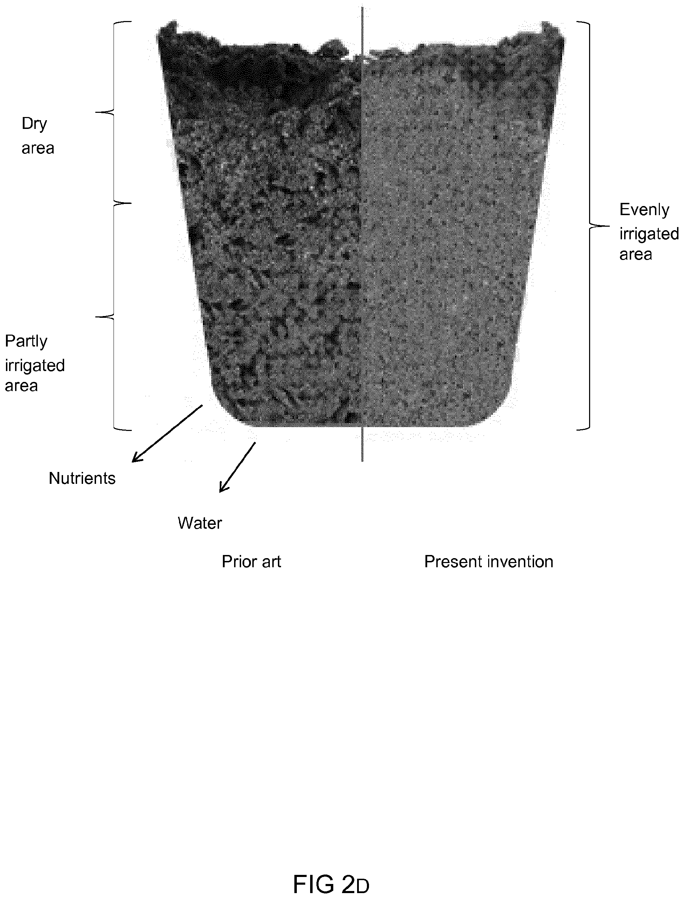

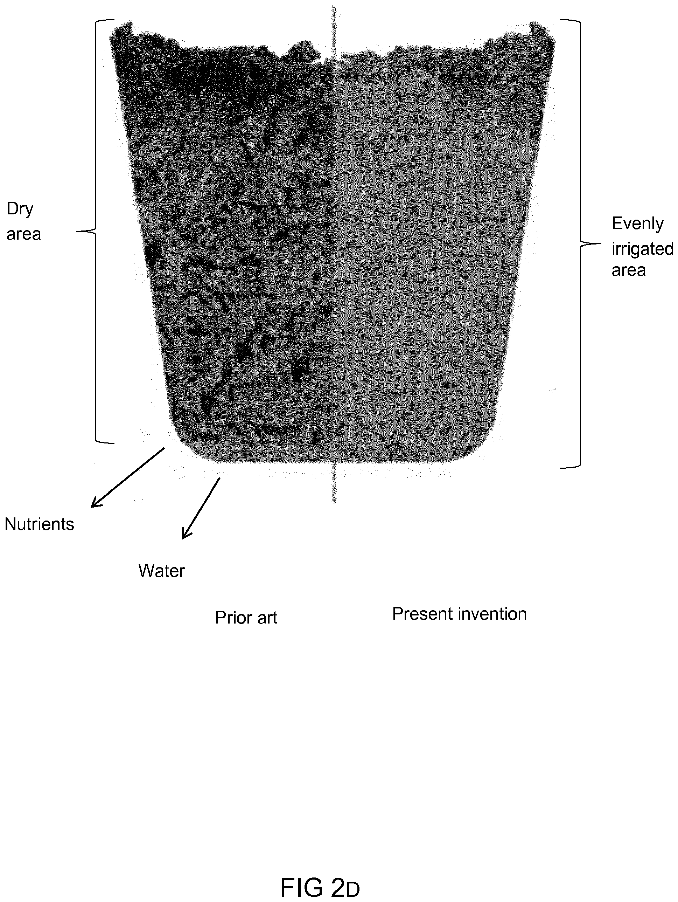

Fig 2a to Fig 2d compare prior art potting soil and growing substrate according to the present invention. The growth substrate according to present invention comprises nutrients that are realized according to the plant growth cycle and therefore there is no need to add fertilizers or other additives. The growth medium according to present invention is made of natural renewable sources only and contains no pesticides, fungicides, hormones or other potentially harmful substances. With prior known potting soils frequent watering is needed which leaches nutrients away. With the present growth substrate nutrients and water are distributed evenly, and plant roots also have access to oxygen at all times. Unlike the known potting soils, the growth medium according to present invention keeps a consistent pH level.

According to present invention the water absorbency is even in two ways, when the growing substrate is irrigated by watering the upper part of growing substrate and when the lower part of growing substrate is dipped into water.

## Claims

1. A method for producing plant growing substrate, **characterized by** that the method comprises steps of:
a) preparing a polyvinyl formal (PVF) solution with a concentration between 5 to 15% by placing PVF granules into distilled water and mixing at 70 °C-95 °C, in a controlled water bath for 0.5-6 hours;
b) mixing starch into the solution and the stirring obtained mixture;
c) pouring aldehyde, into the mixture and stirring the mixture;
d) mixing concentrated sulfuric acid with water and adding it to the mixture of step c) while constantly stirring;
e) heating the mixture of step d) to 30 °C-70 °C and adding coir, peat, and mineral components;
f) pouring the mixture of step e) into molds and heating the molds 55 °C-95 °C for 1-24 hours;
g) removing the excess acid from material obtained in step f); and
h) drying the material.

2. The method of claim 1, wherein mixing in step a) is conducted at 80 °C for 1.5 hours.

3. The method of claim 1, wherein the aldehyde is selected from the group consisting of formaldehyde, acetaldehyde, glutaraldehyde and glyoxal.

4. The method of claim 3, wherein the aldehyde is formaldehyde.

5. The method of claim 1, wherein the mixture is heated to 50°C.

6. The method of claim 1, wherein the molds are heated to 75 °C for 4 hours.

7. The method of claim 1, wherein in step g) acid is removed by vacuum washing the material with water.

8. The method of claim 1, wherein before step g) the material is treated with sodium hydroxide to neutralize acids.

9. A plant growing media comprising:
1-25 w% of concentrated sulfuric acid;
1-80 w% of distilled water; and
1-50 w% of starch, **characterised in that** the media further comprises:
1-50 w% of polyvinyl formal (PVF); and
1-25 w% of aldehyde solution.

10. The growing media of claim 9, wherein the aldehyde solution is formaldehyde, acetaldehyde glutaraldehyde or glyoxal solution, or a mixture thereof.

11. The growing media of claim 9, wherein the starch is potato starch.

12. The plant growing media of claim 9, wherein the media additionally comprises one or more of coco coir, sphagnum peat, fertilizers and limestone.

13. The plant growing media of claim 12, wherein the media comprises up to 95% of coco coir, or sphagnum peat.

## Patentansprüche

1. Verfahren zur Herstellung von Pflanzenwachstumssubstrat, indem das Verfahren durch die folgenden Schritte bestimmt ist:
a) Vorbereitung einer Polyvinylformallösung (PVF) mit einer Konzentration zwischen 5 bis 15%, indem PVF-Granulate in destilliertes Wasser gegeben werden und bei 70-95° C in einem kontrollierten Wasserbad für 0,5-6 Stunden gemischt werden;
b) Mischung von Stärke in die Lösung und verrühren der erhaltenen Mischung;
c) Eingießen von Aldehyd in die Mischung und mischen derselben;
d) Mischung der konzentrierten Schwefelsäure mit Wasser und Hinzugabe dieser zu der Mischung aus Schritt c) bei konstantem verrühren;
e) Erhitzung der Mischung aus Schritt d) auf 30° C-70° C und Hinzugabe von Kokosfaser, Torf und mineralischen Bestandteilen;
f) Eingießen der Mischung aus Schritt d) in Formen und Erhitzung der Formen auf 55° C-95° C für 1-24 Stunden;
g) Entfernung der überschüssigen Säure von dem erhaltenen Material aus Schritt f); und
h) Trocknung des Materials.

2. Verfahren nach Anspruch 1, wobei die Mischung aus Schritt a) bei 80° C für 1,5 Stunden ausgeführt wird.

3. Verfahren nach Anspruch 1, wobei das Aldehyd aus der Gruppe, welche aus Formaldehyd, Acetaldehyd, Glutaraldehyd und Glyoxal besteht, ausgewählt wird.

4. Verfahren nach Anspruch 3, wobei das Aldehyd ein Formaldehyd ist.

5. Verfahren nach Anspruch 1, wobei die Mischung auf 50° C erhitzt wird.

6. Verfahren nach Anspruch 1, wobei die Formen auf 75° C für 4 Stunden erhitzt werden.

7. Verfahren nach Anspruch 1, wobei in Schritt g) Säure entfernt wird, indem das Material mit Wasser Vakuum-gewaschen wird.

8. Verfahren nach Anspruch 1, wobei vor Schritt g) das Material mit Natronlauge behandelt wird, um die Säure zu neutralisieren.

9. Pflanzenwachstumsmedium, bestehend aus:
1-25 w% konzentrierter Natronlauge;
1-80 w% destilliertem Wasser, und
1-50 w% Stärke, die **dadurch gekennzeichnet ist, dass** das Medium des Weiteren:
1-50 w% Polyvinylformal (PVF); und
1-25 w% Aldehydlösung enthält.

10. Wachstumsmedium aus Anspruch 9, wobei die Aldehydlösung aus Formaldehyd, Acetaldehyd, Glutaraldehyd oder Glyoxallösung besteht, oder eine Mischung davon ist.

11. Wachstumsmedium aus Anspruch 9, wobei die Stärke Kartoffelstärke ist.

12. Pflanzenwachstumsmedium aus Anspruch 9, wobei das Medium zusätzlich eine oder mehr Kokosfaser, Torfmull, Düngemittel und Kalkstein enthält.

13. Pflanzenwachstumsmedium nach Anspruch 12, wobei das Medium aus bis zu 95% Kokosfaser oder Torfmull besteht.

## Revendications

1. Procédé de production d'un substrat de croissance de plantes, **caractérisé en ce que** le procédé comprend des étapes de:
a) préparer une solution polyvinylformale (PVF) avec une concentration comprise entre 5 et 15% en plaçant des granulés de PVF dans de l'eau distillée et en mélangeant entre 70° C et 95° C, dans un bain-marie contrôlé pendant 0,5 et 6 heures;
b) Mélanger l'amidon dans la solution et le mélange d'agitation obtenu;
c) Verser l'aldéhyde dans le mélange et agiter le mélange;
d) Mélanger de l'acide sulfurique concentré avec de l'eau et l'ajouter au mélange de l'étape c) 10 tout en agitant constamment;
e) Chauffer le mélange de l'étape d) entre 30° C et 70° C et ajouter des composants de fibre de coco, de tourbe et de minéraux;
f) Verser le mélange de l'étape e) dans des moules et chauffer les moules entre 55° C et 95° C pendant 1 à 24 heures;
g) Eliminer l'excès d'acide du matériau obtenu à l'étape f); et
h) Sécher le matériau.

2. Procédé selon la revendication 1, dans lequel le mélange à l'étape a) est effectué à 80° C pendant 1,5 heure.

3. Procédé selon la revendication 1, dans lequel l'aldéhyde est choisi dans le groupe constitué par le formaldéhyde, l'acétaldéhyde, le glutaraldéhyde et le glyoxal.

4. Procédé selon la revendication 3, dans lequel l'aldéhyde est le formaldéhyde.

5. Procédé selon la revendication 1, dans lequel le mélange est chauffé à 50° C.

6. Procédé selon la revendication 1, dans lequel les moules sont chauffés à 75° C pendant 4 heures.

7. Procédé selon la revendication 1, dans lequel, dans l'étape g), l'acide est éliminé par lavage sous vide du matériau 25 avec de l'eau.

8. Procédé selon la revendication 1, dans lequel, avant l'étape g), on traite le matériau avec de l'hydroxyde de sodium pour neutraliser les acides.

9. Un milieu de culture de plantes comprenant:
1-25% en poids d'acide sulfurique concentré;
1-80% en poids d'eau distillée; et
1-50% en poids d'amidon, **caractérisé en ce que** le milieu comprend en outre:
1-50% en poids de polyvinyle formel (PVF); et
1-25% en poids de solution d'aldéhyde.

10. Milieu de croissance selon la revendication 9, dans lequel la solution d'aldéhyde est le formaldéhyde, l'acétaldéhyde glutaraldéhyde ou une solution de glyoxal, ou un mélange de celles-ci.

11. Milieu de croissance selon la revendication 9, dans lequel l'amidon est de l'amidon de pomme de terre.

12. Milieu de culture de plantes selon la revendication 9 dans lequel le milieu comprend en outre une ou plusieurs fibres de coco, de tourbe de sphaigne, d'engrais et de calcaire.

13. Milieu de culture de plantes selon la revendication 12 dans lequel les milieux comprennent jusqu'à 95% de fibres de coco, ou tourbe de sphaigne.
